# FASCICULE DE BREVET EUROPEEN

(11) **EP 1 431 731 B1**
(45) Date de publication et mention de la délivrance du brevet: **29.03.2006**
(21) Numéro de dépôt: 03356187.9
(22) Date de dépôt: 26.11.2003
(51) Int. Cl.: G01J 5/20

(54) **Dispositif de détection de rayonnements électromagnétiques**
Vorrichtung zur Detektion elektromagnetischer Strahlung
Apparatus for detecting electromagnetic radiation

(30) Priorité: 16.12.2002 FR 0215894
(43) Date de publication de la demande: 23.06.2004
(73) Titulaire: SOCIETE FRANCAISE DE DETECTEURS, INFRAROUGES- SOFRADIR, F-92290 Chatenay Malabry (FR)
(72) Inventeur: Robert, Patrick, 38140 Reaumont (FR)
(74) Mandataire: Vuillermoz, Bruno

(56) Documents cités:
- US-A- 6 028 309

## Description

L'invention concerne un dispositif pour la détection de rayonnements électromagnétiques, et en outre sa visualisation sous forme analogique.

Bien que l'invention qui suit soit plus particulièrement décrite en relation avec la détection de rayonnements infrarouges, la présente invention est également applicable au domaine de la détection de rayonnements visibles ou ultraviolets.

Le dispositif de l'invention met en oeuvre des détecteurs thermiques de type microbolométrique. En effet, ce type de détecteurs est susceptible de fonctionner à température ambiante, c'est à dire sans la nécessité de refroidissement, contrairement au dispositif de type détecteurs quantiques, qui convertissent directement l'énergie du rayonnement capté en porteurs électriques libres.

Ce type de détecteur non refroidi met en oeuvre la variation d'une propriété de l'un des matériaux qui les constitue en fonction de la température. Dans le cadre de la mise en oeuvre de détecteurs bolométriques, cette propriété est la résistivité du matériau. De manière connue, un tel détecteur non refroidi associé pour chaque photosite ou pixel comporte :
- des moyens d'absorption du rayonnement, pour la conversion de ce dernier en chaleur ;
- des moyens d'isolation thermique du détecteur, permettant à celui-ci de s'échauffer ;
- des moyens de thermométrie, qui, dans le cadre d'un détecteur bolométrique utilise un élément résistif variable avec la température et ;
- des moyens de lecture de signaux électriques issus des moyens de thermométrie, lesdits moyens de lecture intégrant une composante de prise de contact et de transport du signal du matériau bolométrique vers une composante d'exploitation du signal, en général de nature micro-électronique.

Dans le cadre de l'imagerie infrarouge, les détecteurs mis en oeuvre sont généralement réalisés sous forme de matrices de détecteurs élémentaires, rapportés sur un substrat, le plus souvent constitué de silicium.

La mise en oeuvre de tels dispositifs de détection bolométrique n'est pas sans générer des problèmes d'ordre technique.
Tout d'abord, les performances d'un tel détecteur bolométrique non refroidi dépendent des différents facteurs, parmi lesquels figure bien évidemment le matériau bolométrique mis en oeuvre.

Ensuite, pour que ces détecteurs bolométriques puissent fonctionner, il convient de les polariser par un courant de polarisation. Or, sur une matrice de microbolomètres, on observe une dispersion sur la valeur de la résistance nominale des différents détecteurs, polarisés à la même tension constante. Cette dispersion a pour conséquence que le courant de la polarisation des microbolomètres n'est pas uniforme. Aussi, une première solution à ce problème a consisté à procéder à un ébasage global, par colonne de pixels, réalisé au moyen d'un microbolomètre thermalisé.

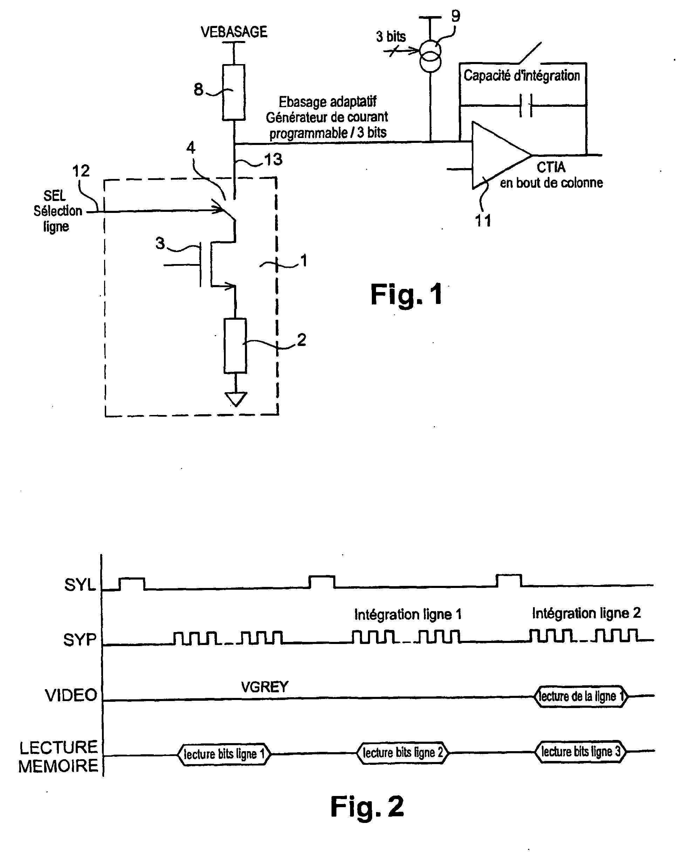

On a ainsi représenté au sein de la figure 1 un pixel (1) schématisé mettant en oeuvre un détecteur bolométrique (2), polarisé au moyen d'un transistor (3) piloté en tension. La résistivité du détecteur (2) est proportionnelle à la quantité de rayonnement qu'il reçoit, ce qui se traduit par une variation de son courant de polarisation. Ce courant est issu d'un premier ébasage, dit ébasage global, au moyen d'un microbolomètre thermalisé (8) soumis à une tension d'ébasage V/Ebasage constante. Par thermalisé, on entend un microbolomètre dont la résistivité est constante et indépendante du rayonnement perçu. On parle également de microbolomètre aveugle.

A également été représentée au sein de cette figure la ligne (12) de sélection par ligne du pixel considéré, agissant sur un interrupteur (4), permettant l'acheminement du courant résultant du détecteur bolométrique (2) au niveau d'un CTIA (11) (selon l'expression anglo-saxonne « *Capacity of Trans Impetence Amplifier* »), chargé d'amplifier ledit signal et de le convertir en tension via une capacité d'intégration (15), avant son exploitation pour sa restitution sous forme notamment de signaux video.

Cet ébasage global induit la suppression des dispersions importantes du courant de polarisation des microbolomètres (2), induites par les dispersions de résistivité desdits détecteurs.

Le microbolomètres thermalisé (8) mis en oeuvre a pour conséquence que le courant intégré par le circuit de lecture dépende le plus possible du rayonnement infrarouge ou du rayonnement détecté, et non pas du courant de polarisation.

Pour autant, ce seul ébasage qualifié de global, ne suffit pas pour obtenir un signal de sortie satisfaisant. En effet, compte-tenu du mode de fabrication des détecteurs, bolométriques notamment, on observe que ceux-ci présentent des valeurs de résistance dispersées.

Ainsi, pour un rayonnement et une capacité d'intégration déterminés, plusieurs microbolomètres peuvent atteindre la zone de saturation située en dehors de la plage de la dynamique de l'étage d'entrée du circuit de lecture. On a donc proposé d'adjoindre au dispositif d'ébasage global, un dispositif supplémentaire, appelé ébasage adaptatatif propre à chacun des pixels de la matrice du circuit de détection, ce qui revient à améliorer la dynamique de l'étage d'entrée.

Cette fonction d'ébasage adaptatif peut être réalisé en agissant sur la tension de grille du transistor VF1D de polarisation du microbolomètre (voir par exemple document US-A-6 028 309).

On a également proposé, afin d'assurer cette fonction d'ébasage adaptatif, de rajouter pour chaque pixel un générateur de courant programmable (9), qui agit en parallèle avec le courant global de polarisation, générant un courant soustractif du signal généré par le détecteur, en fonction de la dispersion inhérente aux pixels considérés par rapport à un signal de référence, et stocké dans une mémoire associée. Dans ce cas, on stocke à l'extérieur du circuit de lecture et de détection, une information numérique représentative de la valeur de dispersion pour chacun des pixels.

Cet ébasage adaptatif par pixel est réalisé pendant la phase d'intégration, c'est à dire d'acquisition de l'image, au moyen d'une source de courant programmable, également dénommé *« DAC d'ébasage »* (DAC *= digital analog convertor* : convertisseur numérique analogique). La résolution du DAC étant de 3 bits, il convient de stocker pour chaque pixel la valeur d'ébasage binaire sur 3 bits appliqués.

Cette valeur est déterminée durant une phase de calibration qui se déroule de la manière suivante :
- une phase de référence bien déterminée est présentée à la matrice de détecteurs ;
- les données d'ébasage fournies au circuit avant intégration sont telles qu'aucun courant d'ébasage n'est injecté ;
- la lecture et la conversion analogique - numérique du signal vidéo issu de cette image sont réalisées grâce à un convertisseur analogique numérique ;
- les 3 bits de poids fort de chaque pixel sont stockées dans une mémoire externe au circuit de lecture.

Ainsi, lors du fonctionnement nominal du circuit, chaque phase d'intégration d'une ligne de la matrice est précédée d'une phase d'acquisition des données d'ébasage stockées dans la mémoire externe pour la ligne de pixels considérée. Le transfert des données entre la mémoire externe et le circuit de lecture s'effectue de manière séquentielle sur trois entrées numériques, c'est à dire que les 3 bits sont programmées en bit/pixel d'une même ligne.

Si la mise en oeuvre d'un tel ébasage adaptatif donne satisfaction au niveau de la qualité des signaux ainsi détectés, transcrit sous forme analogique, en revanche, et cela ressort très distinctement de ce qui précède, il nécessite la mise en oeuvre d'une mémoire externe, associée au circuit de détection/lecture, complexifiant de la sorte l'électronique du circuit de lecture et de détection.

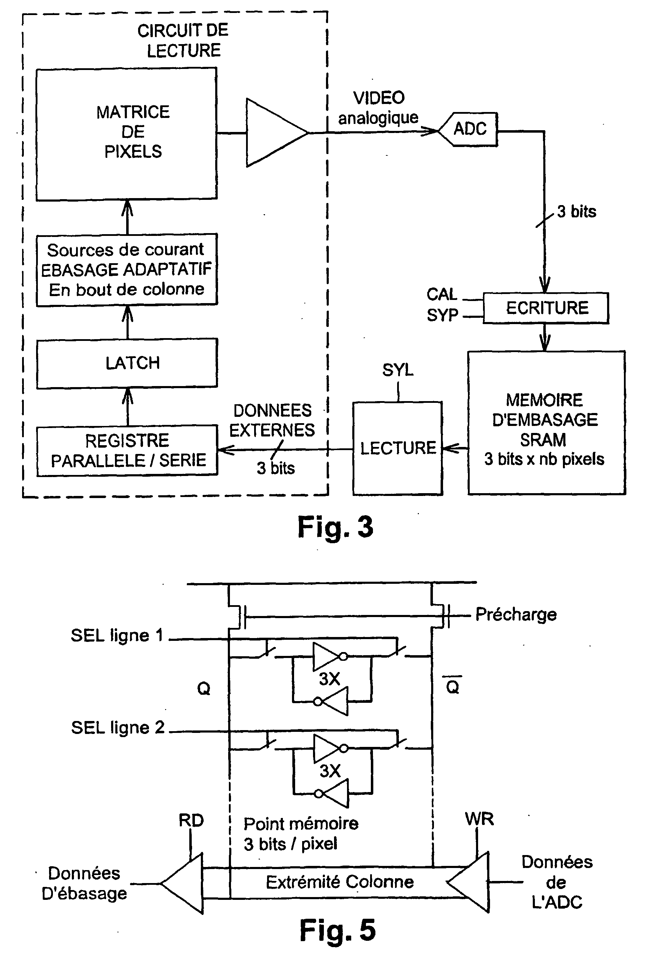

En outre, selon ce procédé, la lecture des informations numériques représentatives des trois bits de poids fort propres à chaque pixel s'effectue pendant l'intégration analogique par lesdits détecteurs, générant un bruit supplémentaire au niveau du circuit de lecture. Cela ressort d'ailleurs très clairement du chronogramme représentatif de la lecture d'ébasage des dispositifs de l'art antérieur, et représenté en figure (2). Ce chronogramme correspond au synoptique illustré en figure 3. Ainsi, les trois bits de données d'ébasage externe, préalablement stockés dans la mémoire externe lors de la phase de calibration, sont transmis séquentiellement au circuit de lecture selon un rythme imposé par l'horloge pixel SYP. Ces données sont stockées temporairement dans une mémoire tampon interne, appelée LATCH, qui maintient les informations d'ébasage d'une ligne complète pendant toute la durée de l'intégration. Il ressort donc que d'un point de vue chronogramme, la lecture des données d'ébasage de la ligne n s'effectue pendant l'intégration de la ligne n-1 dans un registre à entrée série et à sortie parallèle. A la fin de la phase d'intégration, le passage à l'état haut du signal de synchronisation (ligne SYL) déclenche le transfert des données d'ébasage dans la mémoire tampon LATCH, et l'intégration de la ligne n peut ensuite commencer, lors du passage à l'état bas dudit signal de synchronisation SYL. Il n'y a donc pas immunité entre le traitement analogique et le traitement numérique des signaux au niveau du pixel et de la colonne à laquelle il appartient, notamment en phase d'écriture de la mémoire

Cela a pour conséquence une dégradation de la performance en bruit du circuit de lecture, qui doit rester compatible avec la caractéristique propre au détecteur (comprise entre 250 µV et 500 µV).

Dans le synoptique de la figure 3, le convertisseur analogique numérique externe (ADC) code le signal vidéo sur trois bits lors de la phase de calibration. Dans cette configuration, c'est l'électronique de pilotage du circuit qui assure la gestion écriture/lecture des données d'ébasage au niveau de la mémoire externe et du circuit de lecture.

L'objet de l'invention est de s'affranchir de ces différents inconvénients. Elle propose notamment d'intégrer au niveau de chaque pixel la mémoire nécessaire au stockage de l'information propre à la dispersion de chacun de ceux-ci par rapport au signal de référence.

En d'autres termes, l'invention concerne un dispositif de détection de rayonnements électromagnétiques mettant en oeuvre un circuit de détection associé à un circuit de lecture, le circuit de détection étant constitué d'une matrice de pixels de détection, chacun desdits pixels étant constitué d'un détecteur thermique de type bolométrique polarisé, et délivrant un courant électrique représentatif du rayonnement détecté, ledit courant étant contrôlé par un double ébasage, respectivement :
- un ébasage global réalisé au moyen d'un bolomètre thermalisé, assurant l'extraction dudit courant électrique, d'un premier courant de valeur constante inhérent à la polarisation dudit détecteur thermique,
- un ébasage adaptatif propre à chacun des pixels, réalisé au moyen d'un générateur de courant programmable, propre à chacun des pixels, générant un courant soustractif dudit courant, en fonction de la dispersion inhérente au pixel considéré par rapport à un signal de référence et stocké dans une mémoire associée.

Elle se caractérise en ce que ladite mémoire associée est intégrée au niveau de chacun desdits pixels.

Ce faisant, on intègre au niveau du circuit de lecture même un convertisseur analogique numérique, et la mémoire d'ébasage adaptatif, permettant de fait d'intégrer également la gestion des phases de calibration et de lecture des données d'ébasage.

Cela simplifie considérablement l'électronique de proximité du circuit de détection. Qui plus est, la phase de lecture des données de chacune des mémoires associées intervient entre la fin de l'intégration d'une ligne n et le début de l'intégration d'une ligne n+1.

Les commutations dans le pixel, liées à la lecture de la mémoire ne sont donc pas couplées avec la phase sensible d'intégration du courant par le dispositif dénommé CTIA, selon l'expression anglo-saxonne « *Capacity of Trans Impetence Amplifier* », c'est à dire un dispositif de conversion charge/tension d'un bout de colonne.

La manière de réaliser l'invention et les avantages qui en découlent ressortiront mieux de l'exemple de réalisation qui suit donné à titre indicatif et non limitatif à l'appui des figures annexées.
La figure 1 représente le schéma de principe d'un détecteur microbolométrique conforme à l'art antérieur.
La figure 2 représente un chronogramme représentatif de la mise en oeuvre du détecteur de l'art antérieur.
La figure 3 est un schéma de principe général de fonctionnement du détecteur également conforme à l'art antérieur.
La figure 4 est une représentation du synoptique du détecteur conforme à l'invention.
La figure 5 est une représentation schématique simplifiée de la mémoire d'ébasage intégrée dans le pixel de détection, associée au dispositif d'amplification de lecture et d'écriture situé en bout de colonne.
La figure 6 est une représentation schématique du dispositif de lecture de la mémoire d'ébasage intégrée.
La figure 7 est un chronogramme représentatif de la lecture de la mémoire d'ébasage.

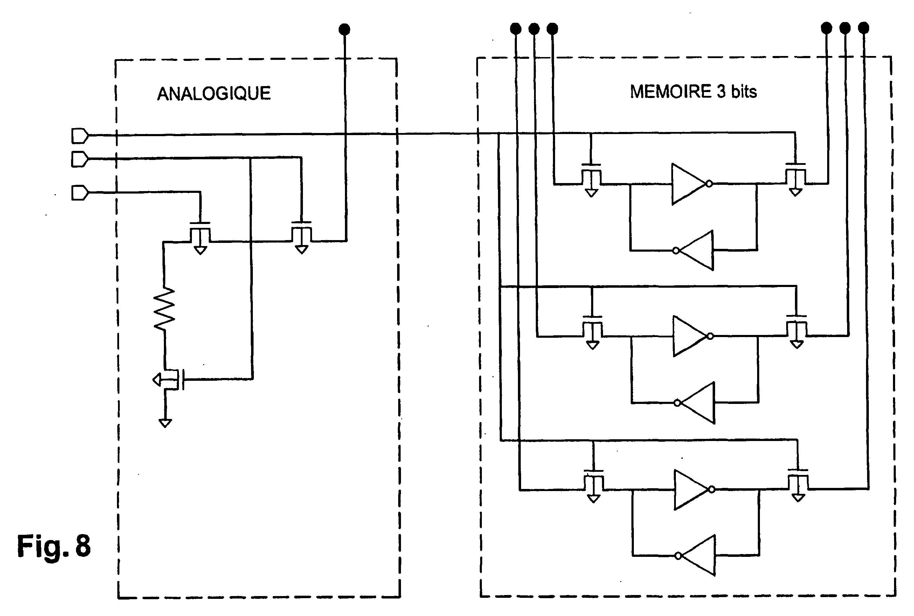

La figure 8 est la représentation du circuit électronique mis en oeuvre au niveau d'un pixel conforme au dispositif de détection de l'invention.

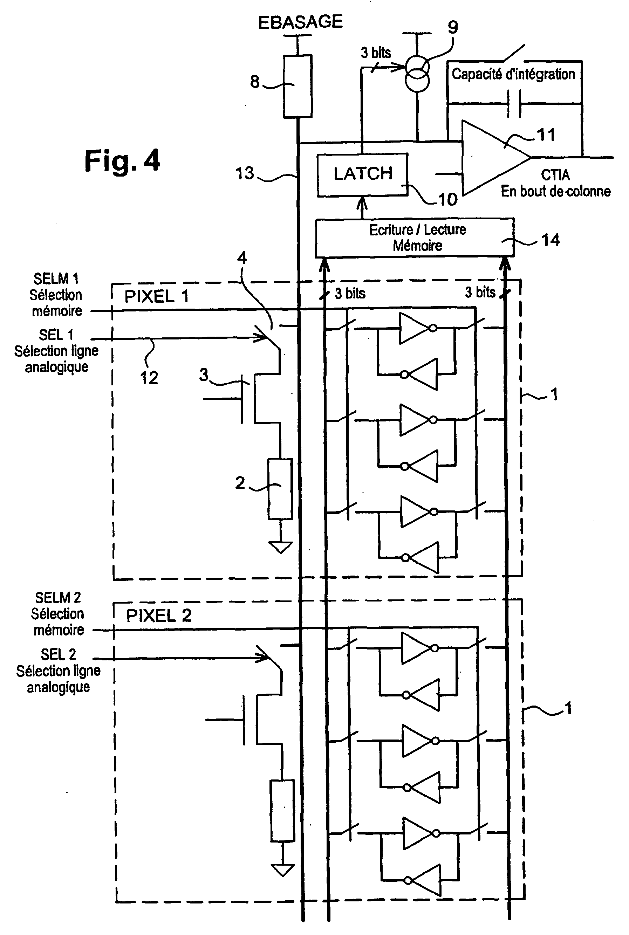

On a donc, en relation avec la figure 4, représenté un synoptique simplifié d'une colonne de deux pixels conforme à l'invention.

Les différents éléments intervenant dans ces pixels ont conservé les mêmes références numériques que celles en relation avec les figures de l'art antérieur décrit précédemment.

Fondamentalement, lesdits pixels ont été représentés par deux rectangles à traits discontinus. Chaque pixel intègre, conformément à l'art antérieur, un détecteur microbolométrique (2), associé à un transistor (3), assurant la polarisation du détecteur. Ce transistor peut être fermé en (4) par le biais d'un signal électrique envoyé par le circuit de lecture par une connexion (12), induisant donc la fermeture sur une branche d'ébasage (13), qui comporte, de manière connue, un microbolomètre thermalisé (8) présentant une résistance thermique quasi nulle par rapport à la résistance thermique du microbolomètre de détection (2). Ce microbolomètre (8) est soumis à une tension d'ébasage représentée par l'expression en « *V*/*EBASAGE* ».

Cette branche d'ébasage (13) délivre un courant électrique destiné à venir se soustraire du courant de détection issu du détecteur microbolométrique (2), puis traité par le circuit de lecture (non représenté), dans lequel le courant électrique est converti en une tension par un convertisseur courant/tension (11) situé en bout de colonne.

En outre, et selon l'invention, un ébasage adaptatif propre à chacun des pixels est également mis en oeuvre.

Il est constitué en l'espèce d'un générateur de courant programmable (9), générant également un courant soustractif du courant de détection issu du détecteur bolométrique (2), et intégré au niveau du convertisseur courant/tension (11).

Cette source de courant programmable, également dénommé DAC ébasage pour DAC « Digital Analog Convertor » c'est à dire « Convertisseur Numérique Analogique », dispose d'une résolution de trois bits stockées pour chaque pixel dans une mémoire associée.

Selon une caractéristique de l'invention, ces trois bits sont stockées au niveau de mémoires associées à chacun des pixels, tel qu'on peut bien l'observer sur la figure 4.

Ces mémoires sont typiquement constituées d'un inverseur tête-bêche, du type mémoire RAM statique.

Il est stocké dans ces mémoires trois bits de poids fort, représentatifs de la dispersion du signal de sortie du microbolomètre (2) auquel elles sont associées, et déterminés de la manière suivante.

Une scène de référence est présentée à la matrice de pixels, les données d'ébasage fournies au circuit de détection avant intégration étant telles qu'aucun courant d'ébasage n'est injecté.

La lecture et la conversion analogique numérique du signal vidéo issu de cette image sont réalisées au moyen d'un convertisseur analogique numérique et les 3 bits de poids forts de chaque pixel sont stockées dans les mémoires internes associées à chacun des pixels.

La phase de lecture des données est réalisée entre la fin de l'intégration d'une ligne n et le début de l'intégration d'une ligne n + 1.

Les commutations dans le pixel liées à la lecture de la mémoire ne sont donc pas couplées avec la phase sensible d'intégration du courant par le convertisseur courant/tension de fin de colonne. Ce faisant, cela permet de surmonter l'inconvénient lié à la coexistence de dispositifs analogiques à signaux de faible amplitude et de faible bruit avec des systèmes numériques à signaux de forte amplitude générant des perturbations qui limitent les performances du circuit. L'invention surmonte ainsi ces phénomènes en ne réalisant pas de commutations dans la partie numérique pendant les phases d'intégration et d'amplification de signaux analogiques sensibles. Ceci apparaît en outre très clairement à l'analyse comparative des chronogrammes des figures 2 (art antérieur) et 7 (invention) : en effet, dans le cas de l'art antérieur, et ainsi que déjà dit, la lecture des données de la ligne n a lieu pendant l'intégration de la ligne n - 1, alors que dans le cadre de l'invention, celle-ci a lieu entre les phases d'intégration de la ligne n - 1 et de la ligne n. Le gain en termes de performances en bruit du circuit de lecture s'avère ainsi significatif.

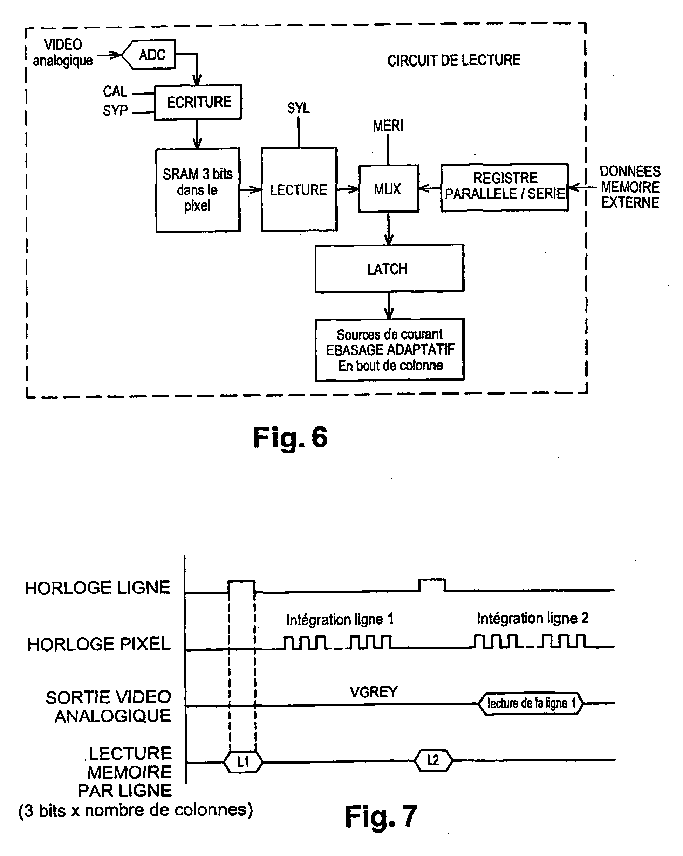

Selon l'invention, la mémoire interne, physiquement implantée au niveau pixel, est adressable par ligne et colonne avec les amplificateurs d'écriture et de lecture situés en bout de colonne (référence (14) sur la figure 4). Le synoptique de la figure 5 permet d'apprécier l'organisation en ligne et colonne du système conforme à l'invention. Les points mémoire au niveau pixel sont adressables en ligne par le signal logique SEL et les données sont écrites ou lues en bout de colonne via les amplificateurs de lecture et d'écriture, respectivement commandés par les signaux RD (commande de lecture) et WR (commande d'écriture).

Il ressort de la présente invention les avantages suivants :
L'intégration de la mémoire d'ébasage dans la surface du pixel permet tout d'abord de simplifier l'électronique de pilotage du circuit. Elle permet en outre d'améliorer l'immunité aux perturbations de la partie numérique du circuit par rapport à la partie analogique de lecture et de mise en forme du signal électromagnétique détecté, et notamment infrarouge.

## Revendications

1. Dispositif de détection de rayonnements électromagnétiques, et notamment infrarouges, mettant en oeuvre un circuit de détection associé à un circuit de lecture, le circuit de détection étant constitué d'une matrice de pixels (1) de détection, chacun desdits pixels étant constitué d'un détecteur thermique de type bolométrique (2) polarisé (3), et délivrant un courant électrique représentatif du rayonnement détecté, ledit courant subissant un double ébasage, respectivement :
- un ébasage global réalisé au moyen d'un bolomètre thermalisé (8), assurant l'extraction dudit courant électrique, d'un premier courant de valeur constante inhérent à la polarisation dudit détecteur thermique (2),
- un ébasage adaptatif propre à chacun des pixels (1), réalisé au moyen d'un générateur de courant programmable (9), propre à chacun des pixels, générant un courant soustractif dudit signal, en fonction de la dispersion inhérente au pixel considéré par rapport à un signal de référence et stocké dans une mémoire associée,
***caractérisé* en ce que** ladite mémoire associée est intégrée au niveau de chacun desdits pixels.

2. Dispositif de détection de rayonnements électromagnétiques selon la revendication 1, ***caractérisé* en ce que** la phase de lecture des données de chacune des mémoires associées auxdits pixels intervient entre la fin de l'intégration d'une ligne n et le début de l'intégration d'une ligne n+1 de la matrice desdits pixels.

## Claims

1. Device for detecting electromagnetic radiations, and in particular infrared radiations, implementing a detection circuit associated with a reading circuit, the detection circuit consisting of an array of detection pixels (1), each of said pixels consisting of a thermal detector of biased (3) bolometric type (2), and delivering an electric current representative of the detected radiation, said current undergoing a double baselining, respectively :
• a global baselining carried out by means of a thermally isolated bolometer (8), ensuring the extraction from the said electric current, of a first current of constant value inherent to the biasing of said thermal detector (2),
• an adaptive baselining specific to each of the pixels (1), carried out by means of a programmable current generator (9), specific to each of the pixels, generating a current for subtraction from said signal, as a function of the dispersion inherent to the pixel considered relative to a reference signal and stored in an associated memory ,
***characterized* in that** said associated memory is integrated at the level of each of said pixels.

2. Device for detecting electromagnetic radiations according to Claim 1,
***characterized* in that** the phase of reading the data of each of the memories associated with said pixels occurs between the end of the integration of a row n and the start of the integration of a row n+1 of the array of the said pixels.

## Patentansprüche

1. Vorrichtung zum Erfassen elektromagnetischer Strahlung, insbesondere Infrarot-Strahlung, welche eine einer Leseschaltung zugeordnete Erfassungsschaltung einsetzt, wobei die Erfassungsschaltung aus einer Matrix aus Erfassungspixeln (1) besteht, wobei jedes der genannten Pixel aus einem Thermodetektor des unter Vorspannung gesetzten (3), bolometrischen (2) Typs besteht und einen für die erfaßte Strahlung repräsentativen elektrischen Strom liefert, wobei der genannte Strom einem doppelten Abgleich unterzogen wird, nämlich:
- einem mittels eines thermalisierten Bolometers (8) durchgeführten globalen Abgleich, welcher das Ausblenden eines ersten, der Vorspannung des genannten Thermodetektors (2) inhärenten Stroms von konstantem Wert aus dem genannten elektrischen Stroms sicherstellt,
- einem jedem der Pixel (1) eigenen adaptiven Abgleich, welcher mittels eines jedem der Pixel eigenen programmierbaren Stromerzeugers (9) durchgeführt wird, der einen von dem genannten Signal subtraktiven Strom erzeugt, in Abhängigkeit von der dem fraglichen Pixel inhärenten Streuung in bezug auf ein Referenzsignal und in einem zugeordneten Speicher gespeichert,
**dadurch gekennzeichnet, daß** der genannte zugeordnete Speicher im Bereich jedes der genannten Pixel integriert ist.

2. Vorrichtung zum Erfassen elektromagnetischer Strahlung nach Anspruch 1,
**dadurch gekennzeichnet, daß** die Lesephase der Daten jedes der den genannten Pixeln zugeordneten Speicher zwischen dem Ende der Integration einer Zeile n und dem Anfang der Integration einer Zeile n+1 der Matrix der genannten Pixel stattfindet.,
